# EUROPÄISCHE PATENTSCHRIFT

(11) **EP 0 524 465 B1**
(45) Veröffentlichungstag und Bekanntmachung des Hinweises auf die Patenterteilung: **18.10.1995**
(21) Anmeldenummer: 92111287.6
(22) Anmeldetag: 03.07.1992
(51) Int. Cl.: G01M 1/06

(54) **Vorrichtung zum Messen der Unwucht eines Rotors**
Device for measuring the imbalance of a rotor
Dispositif de mesure de la déséquilibre d'un rotor

(30) Priorität: 22.07.1991 DE 4124285
(43) Veröffentlichungstag der Anmeldung: 27.01.1993
(73) Patentinhaber: HOFMANN WERKSTATT-TECHNIK GMBH, D-64319 Pfungstadt (DE)
(72) Erfinder: Rothamel, Karl, W-6104 Seeheim (DE)
(74) Vertreter: Nöth, Heinz, Dipl.-Phys.

(56) Entgegenhaltungen:
- DE-A- 1 938 260
- US-A- 4 675 565
- US-A- 4 734 601
- US-A- 4 794 288
- PATENT ABSTRACTS OF JAPAN, Bd. 10, Nr. 282 (P-500)(2338) 25. September 1986;& JP-A-61 102 533

## Beschreibung

Die Erfindung betrifft eine Vorrichtung zum Messen der Unwucht eines Rotors nach dem Oberbegriff des Anspruchs 1.

Beim Messen der Unwucht eines Rotors wird der Rotor durch einen Antrieb mit Hilfe eines Elektromotors nacheinander in drei Betriebszustände gebracht. Im ersten Betriebszustand wird der auszuwuchtende Rotor, an welchem die Unwucht gemessen werden soll, auf Meßdrehzahl gebracht. Dies soll möglichst rasch und ruckfrei geschehen. Im zweiten Betriebszustand wird die Unwucht bei möglichst konstanter Drehzahl des Rotors gemessen. Dieser Vorgang soll möglichst frei sein von Schwingungen und Vibrationen, welche aus der Unwuchtmeßvorrichtung, insbesondere vom Antrieb, herrühren. Im dritten Betriebszustand wird nach gemessener Unwucht der auszuwuchtende Rotor abgebremst. Auch dieser Vorgang soll möglichst schnell und ruckfrei durchgeführt werden.

Diesen Anforderungen wird am besten mit einem Antrieb Rechnung getragen, der einen Drehstrommotor, welcher an ein Drei-Phasennetz angeschlossen ist, aufweist. Wenn kein Drei-Phasennetz Zur Verfügung steht, ist es erforderlich, einen Kondensatormotor zu verwenden. Hier handelt es sich um einen Einphasenwechselstrommotor, in dessen Ständer zusätzlich zur einphasigen Hauptwicklung im Hauptstrang der Stromversorgung noch eine um 90° elektrisch versetzte Hilfswicklung vorgesehen ist. Über diese Hilfswicklung kann dann ein um 90° phasenverschobener Hilfsstrom geleitet werden. Die Phasenverschiebung erreicht man durch einen Kondensator (Betriebskondensator), dem während des Anlauf noch ein Anlaufkondensator parallel geschaltet werden kann.

Beim Betrieb eines derartigen Einphasenwechselstrommotors, insbesondere Kondensatormotors, zeigt es sich, daß beim zweiten Betriebszustand, d. h. während des Meßlaufs, während welchem bei konstanter Drehzahl die Unwucht gemessen wird, sich Pendelschwingungen des Läufers des Motors einstellen. Diese Pendelschwingungen treten vor allem bei Meßläufen mit geringer Last auf. Beispielsweise bei einer Auswuchtmaschine für Kraftfahrzeugräder wird die Lagereinrichtung für den Rotor durch eine Meßspindel gebildet, an der das auszuwuchtende Kraftfahrzeugrad aufgespannt wird. Für die Kalibrierung bzw. Nachjustage der Auswuchtmaschine ist es erforderlich, einen Meßlauf ohne aufgespanntes Rad, d. h. einen Meßlauf mit bloßer Meßspindel, durchzuführen. Dieser Meßlauf wird durch den unrunden Lauf des Rotors, welcher durch die Pendelschwingungen des Motorläufers verursacht wird und auch ein starkes Geräusch zur Folge hat, beeinträchtigt. Diese Pendelschwingungen, welche wechselnde Winkelgeschwindigkeiten sind, haben die doppelte Frequenz der Betriebswechselspannung (doppelte Netzfrequenz) und werden, wie erstmals festgestellt wurde, durch ein unvollkommenes Drehfeld hervorgerufen. Dieses Drehfeld wird bei bekannten Kondensatormotoren durch einen Stromversorgungskreis gebildet, in welchem der Betriebskondensator zur Hilfswicklung in Reihe und zur Hauptwicklung parallel geschaltet ist.

Aufgabe der Erfindung ist es, eine Vorrichtung zum Messen der Unwucht eines Rotors der eingangs genannten Art zu schaffen, bei der auch bei annähernd lastfreiem Lauf des Motors Pendelschwingungen des Einphasenwechselstrommotors, insbesondere Kondensatormotors, der den Antrieb der Meßvorrichtung bildet, reduziert sind.

Diese Aufgabe wird erfindungsgemäß nach dem Anspruch 1 gelöst.

Dieser Schwingkreiskondensator kann ohne zusätzlichen Betriebskondensator zum Einsatz kommen. Beim Schwingkreiskondensator kann es sich auch um einen zusätzlich zum Betriebskondensator vorgesehenen Kondensator handeln oder auch um den Betriebskondensator, welcher in den Schwingkreis, insbesondere bei annähernd lastfreiem Meßlauf, d.h. bei konstanter Drehzahl des Motors und mitlaufenden Rotors, geschaltet werden kann. Durch entsprechende Wahl der Kapazität des Kondensators und der Induktivität der Hilfswicklung entsteht in bevorzugter Weise ein Schwingkreis, in den über den Motorläufer durch induktive Kopplung Energie eingespeist wird. Die für die Aufrechterhaltung der Schwingungen des Schwingkreises erforderliche Energie kann auch anderweitig induktiv in den Schwingkreis eingespeist werden. Diese Energie wird für einen Bruchteil einer Periode, insbesondere eine Viertelperiode, gespeichert und wieder abgegeben, wodurch ein rundes Drehfeld während des Meßlaufs bei normaler Unwuchtmessung oder bei der Kalibrierung bzw. Nachjustage der Unwuchtmeßvorrichtung entsteht.

Anhand der Figuren wird an einem Ausführungsbeispiel die Erfindung noch näher erläutert. Es zeigt:
- Fig. 1: schematisch ein Schaltbild eines Stromversorgungskreises für einen Einphasenwechselstrommotor, der als Kondensatormotor ausgebildet ist und als erstes Ausführungsbeispiel als Antrieb für eine Unwuchtmeßvorrichtung dient;
- Fig. 2: den Zustand der in Fig. 1 dargestellten Schaltung beim Anlaufen des Wechselstrommotors;
- Fig. 3: die Betriebsstellung der in Fig. 1 dargestellten Schaltung bei einem Unwuchtmeßlauf, d. h. beim Messen der Unwucht eines auszuzuwuchtenden Rotors oder beim Kalibrieren bzw. bei der Nachjustage (annähernd lastfreier Lauf);
- Fig. 4: die Betriebsstellung der in Fig. 1 dargestellten Schaltung beim Abbremsen nach dem Unwuchtmeßlauf;
- Fig. 5: ein Schaltbild für ein zweites Ausführungsbeispiel; und
- Fig. 6: ein Schaltbild für ein drittes Ausführungsbeispiel.

In den Figuren ist ein Einphasenwechselstrommotor, insbesondere Kondensatormotor, mit zugehörigem Stromversorgungskreis, bestehend aus Hauptstrang und Hilfsstrang, dargestellt. Im Hauptstrang befindet sich eine Hauptwicklung W1 des Motors, und im Hilfsstrang befindet sich eine Hilfswicklung W2. Wie eine zweipolig (einphasig) angeschlossene Asynchronmaschine mit Kurzschlußläufer entwickelt der dargestellte Einphasenmotor bei positiven und negativen Drehzahlen treibende Momente. Unter Mitwirkung der Läuferströme entsteht ein elliptisches, d. h. in seiner Stärke von der momentanen Winkellage des Läufers M des Motors abhängiges Drehfeld der jeweiligen Richtung des Läufers M. Durch die zusätzliche Hilfswicklung W2, welche um 90° elektrisch versetzt ist, kann durch diese ein 90° verschobener Hilfsstrom geleitet werden. Die Phasenverschiebung läßt sich durch einen Kondensator C2, der als Betriebskondensator geschaltet werden kann, erreichen.

Da der optimale Hilfsstrom von der Drehzahl abhängt, wird dem Kondensator C2 dann, wenn er als Betriebskondensator geschaltet ist, während des Anlaufs noch ein Anlaufkondensator C1 parallel geschaltet.

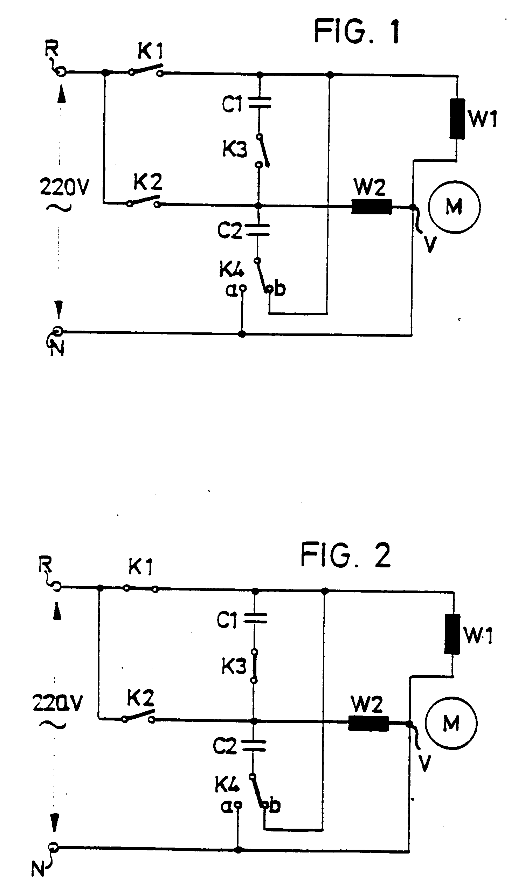

Um die verschiedenen Betriebszustände des Einphasenwechselstrommotors für den Antrieb einer Auswuchtmaschine, die nicht näher dargestellt ist, einzustellen, sind beim ersten Ausführungsbeispiel (Fig. 1 bis 4) verschiedene Kontakte K1 bis K4 vorgesehen. Der Kontakt K1 dient zum Verbinden der Stromversorgungsschaltung, bestehend aus dem Hauptstrang und dem Hilfsstrang, mit einem Einphasennetz (z. B. 220 Volt Wechselspannung). Bei geschlossenem Kontakt K1 wird der Läufer L des Motors mit positiver Drehzahl in Vorwärtsrichtung angetrieben.

Der Kontakt K2 dient ebenfalls zum Verbinden der Stromversorgungsschaltung, bestehend aus dem Hauptstrang und dem Hilfsstrang, mit dem Einphasennetz bestehend aus Mittelpunktleiter N und Hauptleiter R (z.B. 220 Volt Wechselspannung). Bei geschlossenem Kontakt K2 wird der Motor abgebremst.

Der Kontakt K3 dient zum Einschalten des Anlaufkondensators C1. Bei geschlossenem Kontakt K3 wird der Anlaufkondensator C1 in Reihe mit der Hilfswicklung W2 und parallel zur Hauptwicklung W1 geschaltet.

Der Kontakt K4 hat eine Umschaltfunktion und kann den Kondensator C2 parallel zur Hilfswicklung W2 schalten, wenn er sich in einer Schaltposition a befindet. Wenn der Kontakt K4 sich in einer Schaltposition b befindet, wird der Kondensator C2 in Reihe zur Hilfswicklung W2 geschaltet und wirkt dann als Betriebskondensator.

Im folgenden werden die verschiedenen Betriebszustände, welche eingestellt werden können, anhand der Figuren 2 bis 4 noch näher erläutert.

In der Fig. 2 ist der Betriebszustand dargestellt, bei welchem der auszuwuchtende Rotor, welcher in die Lagereinrichtung der Auswuchtmaschine eingebracht ist, durch den Elektromotor auf die Meßdrehzahl hochgefahren wird. Hierzu werden die Kontakte K1 und K3 geschlossen. Der Kontakt K4 befindet sich in der Schaltposition b. Der Kontakt K2 ist geöffnet. In diesem Betriebszustand wird der Läufer M des Motors in Vorwärtsrichtung angetrieben, und der auszuwuchtende Rotor, an welchen die Unwucht gemessen werden soll, auf Meßdrehzahl gebracht. In diesem Betriebszustand sind die beiden Kondensatoren C1 und C2 parallel in Reihe zur Hilfswicklung W2 geschaltet.

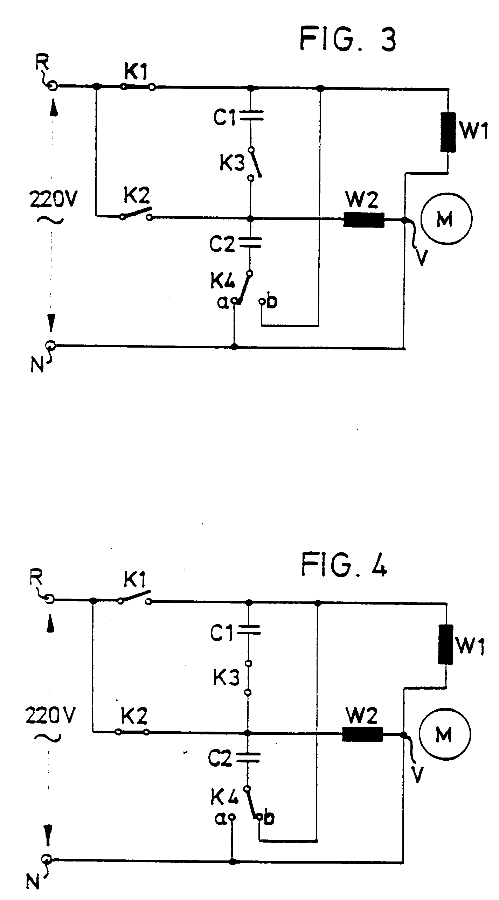

In der Fig. 3 ist der Betriebszustand dargestellt, der beim Meßlauf mit annähernd lastfreiem Lauf für den Motor, d.h. bei konstanter Drehzahl im Falle einer als Universalmaschine mit zwei Lagerböcken ausgebildeten Auswuchtmaschine oder im Falle einer mit Meßspindel ausgestatteten Auswuchtmaschine vorliegt. Es werden in diesem Fall Pendelschwingungen des Läufers M vermieden.

Um einen Meßlauf mit der Unwuchtmeßvorrichtung durchzuführen, werden die Kontakte K1 bis K4 in die in der Fig. 3 dargestellten Schaltpositionen gebracht. In diesem Betriebszustand wird ein Meßlauf mit dem Nullrotor bzw. mit leerer Meßspindel für Kalibrier- bzw. Nachjustagezwecke oder mit einem Unwuchtkörper bei einem normalen Unwuchtmeßvorgang durchgeführt, nachdem beispielsweise gemäß dem in Fig. 2 dargestellten und oben erläuterten Anlauf-Betriebszustand die Vorrichtung auf Meßdrehzahl gebracht worden ist. Bei dem in der Fig. 3 dargestellten Betriebszustand ist der Kontakt K1 geschlossen, und die Kontakte K2 und K3 sind geöffnet. Der Kontakt K4 befindet sich in Schaltposition a. In dieser Betriebsstellung befindet sich der Kondensator C2 in dem vom Verbindungspunkt V zwischen Hauptstrang und Hilfsstrang zum Mittelpunktleiter N des Versorgungsnetzes geführten Strang parallel zur Hilfswicklung W2. Die Hilfswicklung W2 und der Kondensator C2 bilden einen Schwingkreis. Die Energie für den Schwingkreis wird über den Läufer M des Motors eingespeist und für einen Bruchteil der Periode gespeichert und dann wieder abgegeben, wodurch sich ein rundes Drehfeld erzeugen läßt. Die Energie wird bevorzugt eine viertel Periode im Kondensator C2 gespeichert und dann wieder abgegeben.

Hierbei ist die eine Belegungsseite des Kondensators C2 mit dem Verbindungspunkt zwischen dem über den Kontakt K3 anschließbaren Anlaufkondensator C1 und der von dem Verbindungspunkt V abgekehrten Wicklungsseite der Hilfswicklung W2 verbunden. Die andere Belegungsseite des Kondensators C2 wird über den in die Schaltposition a gebrachten Kontakt K4 mit dem Mittelpunktleiter N des Netzes verbunden.

In der Fig. 4 wird der Rotor abgebremst. Hierzu wird der Kontakt K1 geöffnet, und die Kontakte K2 und K3 werden geschlossen. Der Kontakt K4 verbleibt in der Schaltposition b.

Im dargestellten ersten Ausführungsbeispiel beträgt die Kapazität des Kondensators C2 10 uF. Der Kondensator C2 kann, wie anhand der Fig. 2 erläutert wurde, auch als Betriebskondensator verwendet werden. Die Kapazität des Anlaufkondensators C1 kann 25 uF betragen. Die Hauptwicklung hat eine Induktivität von 210 mH, und die Hilfswicklung hat eine Induktivität von 230 mH.

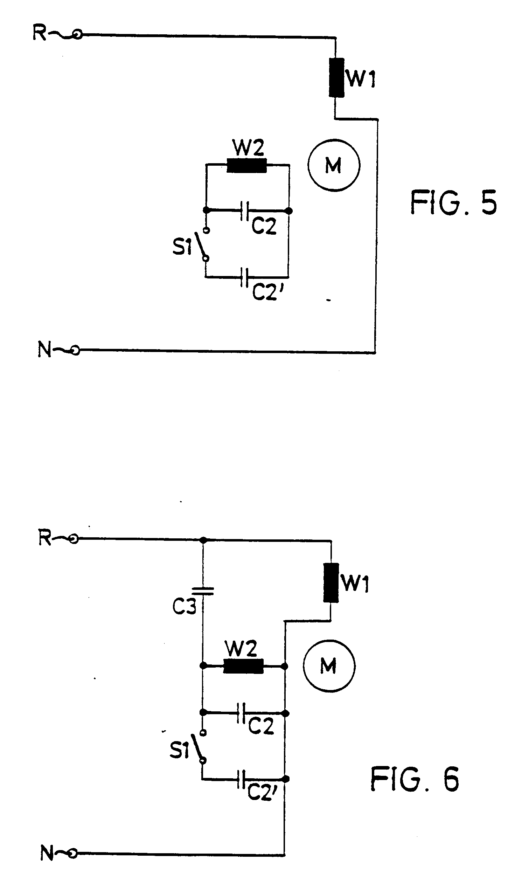

Bei dem in der Fig. 5 dargestellten Ausführungsbeispiel sind im Unterschied zu dem in den Fig. 1 bis 4 dargestellten Ausführungsbeispiel Haupt- und Hilfswicklung getrennt voneinander, d.h. der Verbindungspunkt V ist bei diesem Ausführungsbeispiel nicht vorhanden. Beim Ausführungsbeispiel der Fig. 5 ist der Schwingkreis, bestehend aus der Hilfswicklung 2 und den Schwingkreiskondensatoren C2 bzw. C2′ ein eigenständiger Schaltkreis, der seine Energie induktiv über den Läufer M eingespeist bekommt. Zur Anpassung an unterschiedliche Frequenzen der Betriebswechselspannung (Netzfrequenz) sind zwei Kondensatoren C2, C2′, die mit Hilfe eines Schalters S1 parallel zueinander in den Schwingkreis schaltbar sind, vorgesehen. Hierdurch lassen sich zwei unterschiedliche an verschiedene Netzfrequenzen, beispielsweise 50 Hertz oder 60 Hertz, angepaßte Schwingkreiskapazitäten herstellen. Es ist natürlich auch möglich, die beiden Kondensatoren C2 und C2′ durch den Schalter S1 in Reihe Zueinander zu schalten, um auf diese Weise eine Änderung der Schwingkreiskapazität in Anpassung an die Netzfrequenz zu erhalten. Die Möglichkeit, zwei verschiedene Schwingkreiskapazitäten in Anpassung an die Netzfrequenzen einzustellen, kann auch bei dem in den Fig. 1 bis 4 dargestellten Ausführungsbeispiel in entsprechender Weise vorgesehen sein.

Bei dem in der Fig. 6 dargestellten Ausführungsbeispiel ist noch ein zusätzlicher Betriebskondensator C3 mit relativ geringer Kapazität, beispielsweise 2 uF, vorgesehen. Durch diesen Betriebskondensator C3 lassen sich mechanische Reibungsverluste ausgleichen.

Auch bei den Ausführungsbeispielen der Fig. 5 und 6 kann zusätzlich ein Anlauf- bzw. Bremskondensator wie beim ersten Ausführungsbeispiel der Fig. 1 bis 4 vorgesehen sein.

## Patentansprüche

1. Vorrichtung zum Messen der Unwucht eines Rotors mit einer Lagereinrichtung für den Rotor, die mit einer Auswerteeinrichtung verbundene Meßgeber aufweist, und mit einer Antriebseinrichtung für den Rotor, welcher einen Einphasenmotor aufweist, der eine einphasige Hauptwicklung (W1) in einem Hauptstrang der Stromversorgung und eine um 90° elektrisch versetzte einphasige Hilfswicklung (W2) sowie einen Betriebskondensator (C2) besitzt,
dadurch **gekennzeichnet**,
daß die Hilfswicklung mit einem zuschaltbaren Kondensator (C2; C2′) einen Parallelresonanzschwingkreis (W2, C2; C2′) bildet.

2. Vorrichtung nach Anspruch 1, dadurch gekennzeichnet, daß der Kondensator (C2, C2**′**) bei annähernd lastfreiem Lauf in den Parallelresonanzschwingkreis (W2, C2; C2′) schalbar ist.

3. Vorrichtung nach Anspruch 1 oder 2, dadurch gekennzeichnet, daß der Parallelresonanzschwingkreis (W2, C2; C2′) unabhängig von der Betriebswechselspannung ist.

4. Vorrichtung nach einem der Ansprüche 1 bis 3, dadurch gekennzeichnet, daß zur Anpassung an die Frequenz der Betriebswechselspannung zwischen zwei Kapazitäten (C2, C2′) für den Parallelresonanzschwingkreis (W, C2; C2′) umgeschaltet werden kann.

5. Vorrichtung nach einem der Ansprüche 1 bis 4, dadurch gekennzeichnet, daß über den Motorläufer induktiv Energie in den Parallelresonanzschwingkreis (W2, C2; C2′) gespeist wird.

6. Vorrichtung nach Anspruch 5, dadurch gekennzeichnet, daß die in den Parallelresonanzschwingkreis gespeiste Energie vom Kondensator (C2, C2′) jeweils eine Viertelperiode gespeichert und dann abgegeben wird.

7. Vorrichtung nach einem der Ansprüche 1 bis 6, dadurch gekennzeichnet, daß der in den Parallelresonanzschwingkreis (W2, C2; C2′) schaltbare Kondensator (C2) der Betriebskondensator im Stromversorgungskreis ist.

8. Vorrichtung nach einem der Ansprüche 1 bis 7, dadurch gekennzeichnet, daß ein Anlauf- bzw. Bremskondensator (C1) beim Anlauf und beim Bremsen in den Stromversorgungskreis geschaltet ist.

9. Vorrichtung nach einem der Ansprüche 1 bis 8, dadurch gekennzeichnet, daß ein zusätzlichen Kondensator (C3) in Serie zum Parallelresonanzschwingkreis (W2, C2; C2′) geschaltet ist.

## Claims

1. Apparatus for measuring the unbalance of a rotary member comprising a mounting device for the rotary member, which has measuring sensors connected to an evaluation means, and a drive device for the rotary member, which has a single-phase motor having a single-phase main winding (W1) in a main line portion of the power supply, and a single-phase auxiliary winding (W2) electrically displaced through 90°, as well as an operating capacitor (C2), characterised in that the auxiliary winding with a capacitor (C2; C2′) which can be switched into circuit forms a parallel resonance oscillating circuit (W2, C2; C2′).

2. Apparatus according to claim 1 characterised in that the capacitor (C2, C2′) can be switched into the parallel resonance oscillating circuit (W2, C2; C2′) in approximately load-free operation.

3. Apparatus according to claim 1 or claim 2 characterised in that the parallel resonance oscillating circuit (W2, C2; C2′) is independent of the operating ac voltage.

4. Apparatus according to one of claims 1 to 3 characterised in that it can be switched over between two capacitances (C2, C2′) for the parallel resonance oscillating circuit (W2, C2; C2′) for adaptation to the frequency of the operating ac voltage.

5. Apparatus according to one of claims 1 to 4 characterised in that energy is inductively fed into the parallel resonance oscillating circuit (W2, C2; C2′) by way of the motor rotor.

6. Apparatus according to claim 5 characterised in that the energy fed into the parallel resonance oscillating circuit is stored by the capacitor (C2, C2′) for a respective quarter period and then outputted.

7. Apparatus according to one of claims 1 to 6 characterised in that the capacitor (C2) which can be switched into the parallel resonance oscillating circuit (W2, C2; C2′) is the operating capacitor in the power supply circuit.

8. Apparatus according to one of claims 1 to 7 characterised in that a starter or braking capacitor (C1) is switched into the power supply circuit in the start-up and in the braking modes.

9. Apparatus according to one of claims 1 to 8 characterised in that an additional capacitor (C3) is connected in series with the parallel resonance oscillating circuit (W2, C2; C2′).

## Revendications

1. Dispositif de mesure du balourd d'un rotor, comportant un dispositif de support pour le rotor, qui comprend des capteurs de mesure reliés à un dispositif d'exploitation, et un dispositif d'entraînement du rotor, lequel comporte un moteur monophasé, qui comprend un enroulement (W1) principal monophasé dans une branche principale d'alimentation en courant et un enroulement (W2) auxiliaire monophasé décalé électriquement de 90° ainsi qu'un condensateur (C2) de service,
caractérisé en ce que
l'enroulement auxiliaire forme conjointement avec un condensateur (C2 ; C2′) pouvant être connecté un circuit résonnant parallèle (W2, C2; C2′).

2. Dispositif suivant la revendication 1, caractérisé en ce que le condensateur (C2, C2′) peut être connecté dans le circuit résonnant parallèle (W2, C2 ; C2′) pendant un fonctionnement approximativement sans charge.

3. Dispositif suivant la revendication 1 ou 2, caractérisé en ce que le circuit résonnant parallèle (W2, C2; C2′) est indépendant de la tension alternative de service.

4. Dispositif suivant l'une des revendications 1 à 3, caractérisé en ce que pour l'adaptation à la fréquence de la tension alternative de service, il est possible de commuter entre deux capacités (C2, C2′) pour le circuit résonnant parallèle (W, C2 ; C2′).

5. Dispositif suivant l'une des revendications 1 à 4, caractérisé en ce que le circuit résonnant parallèle (W2, C2 ; C2′) est alimenté en énergie inductivement par l'intermédiaire du rotor du moteur.

6. Dispositif suivant la revendication 5, caractérisé en ce que l'énergie stockée dans le circuit résonnant parallèle est stockée par le condensateur (C2, C2′) pendant un quart de période puis est alors cédée.

7. Dispositif suivant l'une des revendications 1 à 6, caractérisé en ce que le condensateur (C2) pouvant être connecté au circuit résonnant parallèle (W2, C2 ; C2′) est le condensateur de service du circuit d'alimentation en courant.

8. Dispositif suivant l'une des revendications 1 à 7, caractérisé en ce qu'un condensateur (C1) de démarrage et de freinage est connecté au circuit d'alimentation en courant lors du démarrage et du freinage.

9. Dispositif suivant l'une des revendications 1 à 8, caractérisé en ce qu'un condensateur (C3) supplémentaire est connecté en série au circuit résonnant parallèle (W2, C2 ; C2′).
